# EUROPEAN PATENT SPECIFICATION

(11) **EP 4 557 440 B1**
(45) Date of publication and mention of the grant of the patent: **02.12.2026**
(21) Application number: 23839994.3
(22) Date of filing: 13.07.2023
(51) Int. Cl.: H01M 10/0585, H01M 4/13, H01M 10/42, H01M 4/02, H01M 10/04

(54) **ELECTRODE ASSEMBLY**
ELEKTRODENANORDNUNG
ENSEMBLE D'ÉLECTRODES

(30) Priority: 14.07.2022 KR 20220086635
(43) Date of publication of application: 21.05.2025
(73) Proprietor: LG Energy Solution, Ltd., Seoul 07335 (KR)
(72) Inventor: KIM, Soo Young, Daejeon 34122 (KR); LEE, Ung Ju, Daejeon 34122 (KR); YOON, Sung Pil, Daejeon 34122 (KR)
(74) Representative: Goddar, Heinz J.
(86) International application number: PCT/KR2023/010032
(87) International publication number: WO 2024/014903

(56) References cited:
- KR-A- 20150 122 940
- KR-A- 20170 043 240
- KR-A- 20220 023 367
- KR-A- 20220 057 713
- US-A1- 2011 052 954
- US-A1- 2018 006 322

## Description

### Technical Field

This application claims the benefit of priority based on Korean Patent Application No. 10-2022-0086635 dated July 14, 2022.

The present application relates to an electrode assembly.

### Background Art

The application area of energy storage technology expands to mobile phones, camcorders, notebook PCs, electric vehicles, and the like.

One of the research fields of energy storage technology is a secondary battery capable of charging and discharging, and research and development for improving the capacity density and specific energy of such a secondary battery are conducted.

The secondary battery comprises an electrode assembly including a structure in which positive electrodes and negative electrodes are laminated with separators interposed therebetween. Upon designing the electrode assembly, the negative electrode is made to have a loading higher and wider than that of the positive electrode, which is a design to make a so-called N/P ratio greater than 1.

The N/P ratio is the ratio of the capacity per unit area of the negative electrode and the positive electrode, which is a value obtained by dividing the capacity per unit area of the negative electrode by the capacity per unit area of the positive electrode.

The reason why it is designed so that the N/P ratio is greater than 1 is because in the case where the negative electrode is not located on the opposite surface of the positive electrode during the charging process, or the loading of the negative electrode is low, whereby the amount of lithium that can be accommodated in the negative electrode is less than the amount of lithium generated in the positive electrode, there is a problem such as an electrodeposition (electroplating) of lithium.

If the N/P ratio is less than 1, a short of a battery may occur due to lithium precipitating acicularly; the lithium generated in the positive electrode is not fully utilized upon discharge, so that efficiency reduction and capacity deterioration may occur; and the electrolyte decomposes on the surface of the precipitated lithium to result a film growth, whereby efficiency reduction and resistance increase may occur.

Typically, the negative electrode or positive electrode is manufactured by coating a slurry containing an electrode active material on a surface of a current collector and going through drying and rolling processes, where the coated slurry forms an active material layer of the electrode.

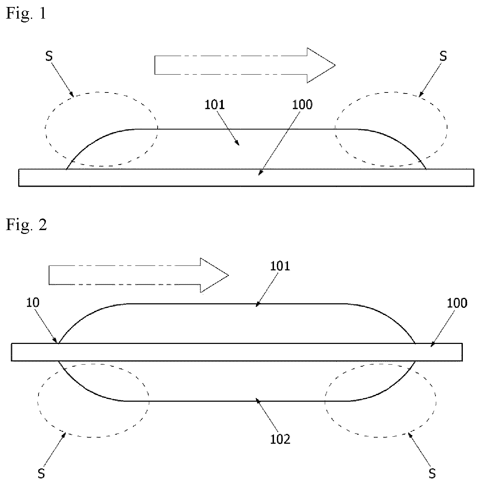

However, as exemplarily shown in Figure 1, in the process of coating the slurry on the current collector (100) to form the active material layer (101), a sliding portion (S in Figure 1), which is a portion where the thickness increases or decreases along the coating direction (arrow direction in Figure 1), is generated at the start site and the end site of the coating by the characteristics of the slurry.

The inclination or width, and the like of the sliding portion is determined depending on the composition of the slurry. When forming the electrode assembly by facing the positive electrode with the negative electrode, the N/P ratio exceeding 1 must be achieved even in the regions of the positive electrode and the negative electrode where the sliding portion exists, but since it is not easy to adjust the inclination or width of the sliding portion, it is also a difficult task to adjust the N/P ratio.

Accordingly, it is a difficult problem to manufacture an electrode assembly so that the N/P ratio is greater than 1 in the entire region where the negative electrode and the positive electrode face each other.

Since it is important to achieve an N/P ratio of more than 1, the capacity per unit area of the negative electrode is applied in excess above the necessary quantity upon designing electrodes.

In such a case, the N/P ratio can be achieved as desired, but surplus portions which are not utilized during actual charging and discharging of the secondary battery are generated in the negative electrode, thereby unnecessarily increasing the volume or weight of the electrode assembly or secondary battery, and showing inefficient results in terms of energy density. US 2018 / 0 006 322 A1 describes an electrode assembly wherein a negative electrode plate and a positive electrode plate are laminated with a separator interposed therebetween. A cross-sectional view of each of the electrode plates includes a straight-cut end portion and a tapering end portion in which the thickness of each active material layer is gradually reduced toward an uncoated region.

### Disclosure

### Technical Problem

The present application relates to an electrode assembly and a use thereof. In the present application, it is one object to provide a structure of an electrode assembly capable of maximizing the capacity per unit area of a positive electrode relative to a negative electrode, while effectively achieving an N/P ratio exceeding 1 in the entire region where the positive electrode and the negative electrode face. Accordingly, the present application is intended to provide an electrode assembly capable of maximizing an energy density per unit volume and unit weight even under an N/P ratio exceeding 1.

The present application is also intended to provide a method for manufacturing such an electrode assembly.

It is also one object of the present application to provide a use for the electrode assembly.

### Technical Solution

The present invention is defined according to the subject matter of the appended independent claim.

The present application relates to an electrode assembly.

The electrode assembly of the present application comprises: a negative electrode; a positive electrode and a separator, wherein
the negative electrode and the positive electrode are laminated with the separator interposed therebetween,
the negative electrode and the positive electrode each include a current collector layer, and an active material layer present at least between the current collector layer and the separator,
the negative electrode and the positive electrode each have a first end portion formed with a tab portion, and a second end portion opposite the first end portion,
the negative electrode and the positive electrode are laminated so that their first end portions face each other, or the first end portion of any one faces the second end portion of the other,
a slitting portion is formed in the active material layer of any one of the first and second end portions of the negative electrode, and a sliding portion may be formed in the active material layer of the other,
the active material layers of both end portions of the positive electrode are located more interiorly than the active material layers of both end portions of the negative electrode facing each other, respectively, and
the ratio I₂/I₁ of the interval (I₂) between the positive electrode active material layer and the negative electrode active material layer at the negative electrode terminal where the sliding portion is formed to the interval (I₁) between the positive electrode active material layer and the negative electrode active material layer at the negative electrode terminal where the slitting portion is formed is in a range of 0.5 to 10.

In the electrode assembly, the negative electrode active material layer may be thicker compared to the positive electrode active material layer.

In the electrode assembly, the sliding portion may be formed in the active material layer of the end portion of the positive electrode end portions, which faces the negative electrode end portion where the slitting portion is formed.

In the electrode assembly, the surface of the sliding portion of the positive electrode active material layer may be a cut surface.

In the electrode assembly, the slitting portion may be formed in the positive electrode active material layer of the terminal opposite to the terminal where the sliding portion of the positive electrode active material layer is formed.

In the electrode assembly, the slitting portion of the positive electrode active material layer may be present interiorly compared to the sliding portion of the negative electrode active material layer.

The electrode assembly may be designed to satisfy Equation 1 below. [Equation 1] $TN / tan {θ}_{1} \leq {I}_{2}$

In Equation 1, T_{N} is the thickness of the negative electrode active material layer, θ₁ is the inclination angle of the sliding portion of the negative electrode, and I₂ is the interval between the positive electrode active material layer and the negative electrode active material layer at the negative electrode terminal where the sliding portion is formed.

Here, tanθ₁ may be in a range of 0.001 to 1 0.

The electrode assembly may be designed to further satisfy Equation 2 below. [Equation 2] ${I}_{2} \leq {T}_{N} / sin {θ}_{1}$

In Equation 2, T_{N} is the thickness of the negative electrode active material layer, θ₁ is the inclination angle of the sliding portion of the negative electrode, and I₂ is the interval between the positive electrode active material layer and the negative electrode active material layer at the negative electrode terminal where the sliding portion is formed.

In the electrode assembly, a second sliding portion may be formed in the positive electrode active material layer of the terminal opposite to the terminal where the sliding portion of the positive electrode active material layer is formed.

Here, the surface of the second sliding portion of the positive electrode active material layer may be a cut surface.

The electrode assembly may be designed to satisfy Equation 3 below. [Equation 3] ${T}_{N} / tan {θ}_{1} \leq {I}_{2} + {T}_{P} / tan {θ}_{2}$

In Equation 3, T_{N} is the thickness of the negative electrode active material layer, θ₁ is the inclination angle of the sliding portion of the negative electrode, I₂ is the interval between the positive electrode active material layer and the negative electrode active material layer at the negative electrode terminal where the sliding portion is formed, T_{P} is the thickness of the positive electrode active material layer, and θ₂ is the inclination angle of the second sliding portion of the positive electrode.

The electrode assembly may be designed to further satisfy Equation 4 below. [Equation 4] ${I}_{2} + {T}_{P} / tan {θ}_{2} \leq {T}_{N} / sin {θ}_{1}$

In Equation 4, T_{N} is the thickness of the negative electrode active material layer, θ₁ is the inclination angle of the sliding portion of the negative electrode, I₂ is the interval between the positive electrode active material layer and the negative electrode active material layer at the negative electrode terminal where the sliding portion is formed, T_{P} is the thickness of the positive electrode active material layer, and θ₂ is the inclination angle of the second sliding portion of the positive electrode.

The electrode assembly may be designed to further satisfy Equation 5 below. [Equation 5] ${θ}_{2} / {θ}_{1} > 1$

In Equation 5, θ₁ is the inclination angle of the sliding portion of the negative electrode, and θ₂ is the inclination angle of the second sliding portion of the positive electrode.

In the electrode assembly, the negative electrode may further comprise an active material layer formed on the lateral side opposite to the side of the current collector layer facing the separator, and in this case, the active material layer formed on the lateral side opposite to the side of the negative electrode current collector layer facing the separator, and the active material layer present between the current collector layer and the separator may have a symmetrical structure.

In the electrode assembly, the positive electrode may further comprise an active material layer formed on the lateral side opposite to the side of the current collector layer facing the separator, and in this case, the active material layer formed on the lateral side opposite to the side of the positive electrode current collector layer facing the separator, and the active material layer present between the current collector layer and the separator may have a symmetrical structure.

The present application also relates to a secondary battery comprising the electrode assembly, and an electrolyte.

### Advantageous Effects

The present application can provide an electrode assembly and a use thereof. The present application can provide a structure of an electrode assembly capable of maximizing the capacity per unit area of a positive electrode relative to a negative electrode, while effectively achieving an N/P ratio exceeding 1 in the entire region where the positive electrode and the negative electrode face. Accordingly, the present application can provide an electrode assembly capable of maximizing an energy density per unit volume and unit weight even under an N/P ratio exceeding 1. The present application can provide a method for manufacturing such an electrode assembly, and a use thereof.

### Description of Drawings

Figures 1 to 3, 6, and 8 are diagrams for explaining a structure of an electrode.
Figures 4, 5, and 7 are diagrams for explaining a structure of an electrode assembly.
Figure 9 is a diagram for explaining a process of forming a slitting portion on an electrode.
Figure 10 is a diagram for explaining an exemplary structure of a negative electrode included in an electrode assembly of the present application.
Figures 11 and 12 are exemplary diagrams for explaining a structure of an electrode assembly of the present application.

### [Explanation of Reference Numerals]

200: separator
300: negative electrode
400: positive electrode
100, 103, 104: current collector layer
101, 102, 301, 302, 401, 402: active material layer
S: sliding portion
10: starting point of active material layer
NC: non-coated portion
1011: lateral side of slitting portion

### Mode for Invention

In this specification, the term sliding portion means an active material layer region where in the cross section of an electrode comprising a current collector layer and an active material layer formed on at least one side of the current collector layer, the thickness of the active material layer substantially increases or decreases along the longitudinal direction of the current collector layer. The increase or decrease in thickness may be achieved at a constant rate, and may also be achieved at a variable rate.

In this specification, the term normal thickness region means a region where in the cross section of the electrode, the thickness of the active material layer is maintained to be substantially constant along the longitudinal direction of the current collector layer.

The electrode means a positive electrode or a negative electrode.

The cross section of the electrode means a cut surface at the time when the electrode has been cut in a direction parallel to the direction connecting the terminal where the uncoated portion of the electrode is present when the electrode is observed from the front and the terminal opposite to the terminal where the uncoated portion is present, and parallel to the normal line of the surface of the current collector layer. Such a cut surface may also be a virtual cut surface, and may be an actual cut surface.

Hereinafter, in the description of the electrode assembly in this specification, the positional relationship of the active material layers of the positive electrode and the negative electrode may be a relationship based on the cross section of the electrode.

Figure 2 is a diagram exemplarily showing the cross-section of the electrode, where as in Figure 2, the electrode of the present application may comprise a current collector layer (100) and an active material layer (101, 102) formed on one or both sides of the current collector layer (100). In this instance, the active material layer (101, 102) is formed so that a portion (a so-called uncoated portion), where the active material layer (101, 102) is not formed at one or more of both terminals of the current collector layer (100), is present. Such an uncoated portion may form a tab portion to be described below. The uncoated portions may also be formed at both terminals of the electrode as in the diagram, and may also be formed only at any one terminal of the electrode. When the uncoated portions exist at both terminals of the electrode, the cutting may be made parallel to the direction connecting both terminals of the electrode where the uncoated portions exist.

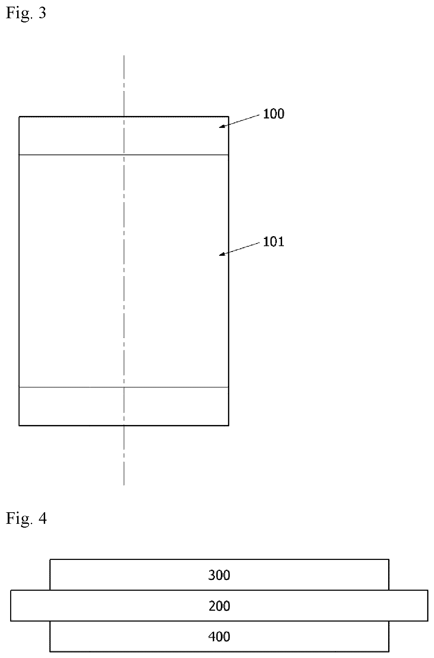

Figure 3 is an example when the electrode of Figure 2 is observed from the front (the surface on which the active material layer (101) is formed), and the dotted line in Figure 3 is a cutting line for observing the cross section of the electrode. As in the dotted line of Figure 3, the cutting may be made in a direction parallel to the direction connecting the terminal where the uncoated portion of the electrode is present when the electrode is observed from the front and the terminal opposite to the terminal where the uncoated portion is present (or the direction connecting both terminals where the uncoated part of the electrode exists), parallel to any one side of the electrode, and parallel to the normal line of the surface of the current collector layer.

The longitudinal direction of the current collector layer may mean a direction parallel to the current collector layer in the cross section of the electrode (for example, the arrow direction in Figure 2).

Generally, the electrode such as the negative electrode or the positive electrode is manufactured by coating a slurry containing an electrode active material on one or both sides of a current collector layer and performing drying and rolling processes, and the coated slurry forms the active material layer of the electrode.

As in Figure 2, in such an electrode, a portion (e.g., a portion indicated by S of Figure 2) where the thickness of the active material layer (101, 102) substantially increases or decreases along the longitudinal direction (arrow direction in Figure 2) of the current collector layer (100) is generated by the characteristics of the slurry.

In this specification, the portion of the active material layer whose thickness substantially increases or decreases as above may be designated as a sliding portion. The sliding portion does not necessarily occur only in the slurry coating process, which may also be formed by etching, cutting, or non-contact cutting, and the like, which are described below.

In addition, here, the matter that the thickness substantially increases or decreases means the case where when a graph has been drawn by setting the portion (for example, 10 in Figure 2) where the active material layer (101, 102) begins in the cross section of the electrode as the original point, taking the distance from the original point to any point of the active material layer (101, 102) measured along the longitudinal direction of the current collector layer as the x-axis value, and taking the thickness of the active material layer (101, 102) at the point of the relevant distance as the y-axis value, the absolute value of the slope of the relevant graph is 0.001 or more. The length of the x-axis and the thickness of the y-axis have the same unit. Here, when the graph is not a straight line, the slope may be a differential value at the relevant point. In another example, the absolute value of the slope at the sliding portion may be 0.002 or more, 0.004 or more, 0.006 or more, 0.008 or more, 0.01 or more, 0.02 or more, 0.04 or more, 0.06 or more, 0.08 or more, 0.1 or more, 0.12 or more, 0.14 or more, 0.16 or more, 0.18 or more, or 0.2 or more, or may also be 10 or less, 9 or less, 8 or less, 7 or less, 6 or less, 5 or less, 4 or less, 3 or less, 2 or less, 1 or less, 0.8 or less, 0.6 or less, 0.4 or less, 0.2 or less, 0.1 or less, 0.08 or less, 0.06 or less, 0.04 or less, 0.02 or less, 0.01 or less, 0.008 or less, 0.006 or less, 0.004 or less, or 0.002 or less or so.

Meanwhile, when the active material layer (101, 102) of the electrode cross section in Figure 2 is observed along the longitudinal direction of the current collector (arrow direction in Figure 2) starting from the original point (10), there is a region where the thickness of the active material layer (101, 102) remains substantially constant from the point where the sliding portion ends until the sliding portion at the other terminal begins, where such a region becomes a normal thickness region. In the normal thickness region, the absolute value of the slope may be in a range of about 0 or more and less than 0.001. In another example, the upper limit of the absolute value of the slope may also be 0.0008 or less, 0.0006 or less, 0.0004 or less, or 0.0002 or less or so.

The electrode assembly of the present application comprises at least a negative electrode; a positive electrode and a separator, where the negative electrode and the positive electrode may be included in the electrode assembly in a laminated state with the separator interposed therebetween. Figure 4 is a diagram showing a form in which a negative electrode (300) and a positive electrode (400) are laminated with a separator (200) interposed therebetween.

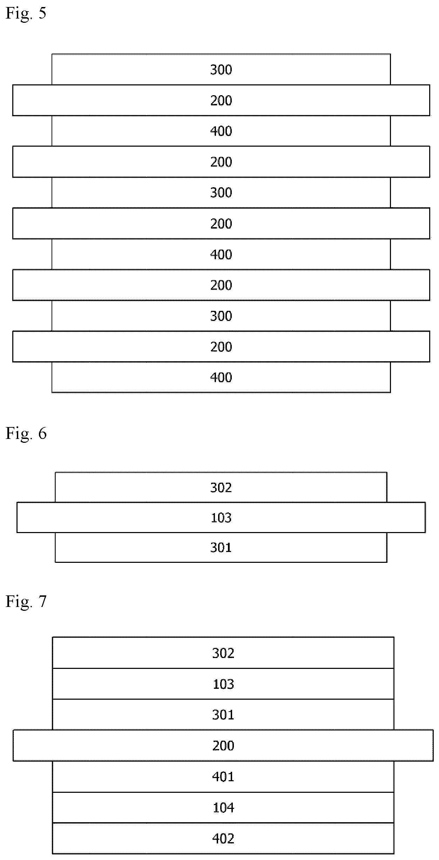

As shown in Figure 4, the electrode assembly may also comprise one separator (200), one negative electrode (300), and one positive electrode (400), and may also comprise any one or more of the foregoing by two or more. For example, as exemplarily shown in Figure 5, the electrode assembly may also comprise two or more plural unit structures in which the negative electrode (300), the separator (200), and the positive electrode (400) are laminated in this order.

The negative electrode of the electrode assembly may comprise a current collector layer and an active material layer formed on at least one side of the current collector layer, and the positive electrode may also comprise a current collector layer and an active material layer formed on at least one side of the current collector layer.

Figure 6 exemplarily shows a negative electrode structure in which the active material layers (301, 302) are formed on both sides of the current collector layer (103). In Figure 6, the active material layers (301, 302) are formed on both sides of the current collector layer (103), but the active material layer may be formed on only one side of the current collector layer.

The positive electrode may also be formed in the same form as the negative electrode.

The structure in which the negative electrode of the same type as in Figure 6 and the positive electrode of the same type are laminated with the separator interposed therebetween is exemplarily shown in Figure 7, and such a structure may comprise a negative electrode active material layer (302), a negative electrode current collector layer (103), a negative electrode active material layer (301), a separator (200), a positive electrode active material layer (401), a positive electrode current collector layer (104), and a positive electrode active material layer (402) sequentially.

In the electrode assembly, the negative electrode and the positive electrode may each comprise a current collector layer (in Figure 7, 103, 104) and at least an active material layer (in Figure 5, 301, 401) present between the current collector layer (in Figure 7, 103, 104) and the separator (200 in Figure 7).

The negative electrode and the positive electrode may each have a first end portion formed with a tab portion, and a second end portion opposite to the first end portion.

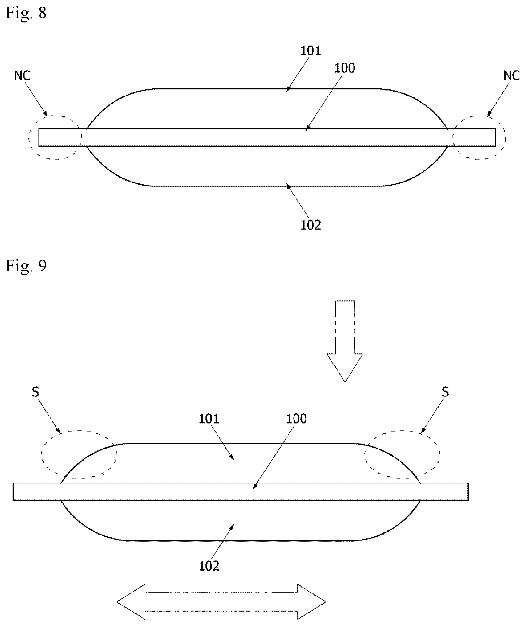

The tab portion may mean the above-described uncoated portion (region of the current collector layer where the active material layer is not formed), and this portion may be a portion where the tab is bonded in a tab welding process, and the like. In another example, the tab portion may mean a portion where the electrode is electrically connected to the outside. Such uncoated portions may be formed at both end portions of the electrode, and may also be formed at only any end portion of the electrode. Figure 8 shows a case where the uncoated portions (NC) are formed at both terminals of the electrode in which the active material layers (101, 102) are formed on both sides of the current collector layer (100). As in Figure 8, when the uncoated portions are formed at both terminals of the electrode, one of the two uncoated portions may be designated as a first end portion, and the opposite side may be designated as a second end portion. In one example, the portion where the tab is attached through tab welding or the like or electrically connected to the outside may be designated as the first end portion.

In the electrode assembly, the negative electrode and the positive electrode may be laminated so that their first end portions face each other. In another example, they may also be laminated so that the first end portion of any one of the negative electrode and positive electrode and the second end portion of the other faces each other. Here, the matter that any two portions face each other means a state that when the electrode is observed along the normal direction of the surface of the separator (200) in the structures of Figures 4, 5, and 7, the portions overlap, whereby at least some are overlapped.

In the electrode assembly of the present application having the above structure, a slitting portion may be formed in one of the active material layers of the first and second end portions of the negative electrode, and a sliding portion may be formed in the other active material layer. In the negative electrode, the normal thickness region may be formed between the slitting portion and the sliding portion.

The slitting portion means a portion formed so that the extension direction of the lateral side of the end portion of the active material layer in the cross section of the electrode forms an angle within ±5 degrees, ±4 degrees, ±3 degrees, ±2 degrees, or ±1 degree with the normal line of the surface of the current collector layer, or the normal line of the surface of the current collector layer and the extension direction of the lateral side are substantially parallel.

Such a slitting portion may be formed by a cutting process such as a slitting or notching process. In this instance, the cross section of the electrode is the same as the cross section of the electrode in the process of explaining the sliding portion and the normal thickness region.

As described above, in the electrode that has undergone coating of the slurry, drying, and rolling, the sliding portions are usually formed at both terminals, whereby its cross section appears in the same shape as in Figure 9. That is, as exemplarily shown in Figure 9, in the process of forming the active material layer (101, 102) by coating the slurry on the current collector (100), the sliding portion, which is a portion (S in Figure 9) where the thickness increases or decreases along the coating direction or the longitudinal direction of the current collector layer (100) (bidirectional arrow direction in Figure 9), is generated at the start site and the end site of the coating by the characteristics of the slurry.

By cutting any one of both end portions on which the sliding portions are formed as such, one end portion through a cutting process such as a slitting or notching process, it is possible to form an electrode in which one end portion is a sliding portion and the other end portion is a slitting portion.

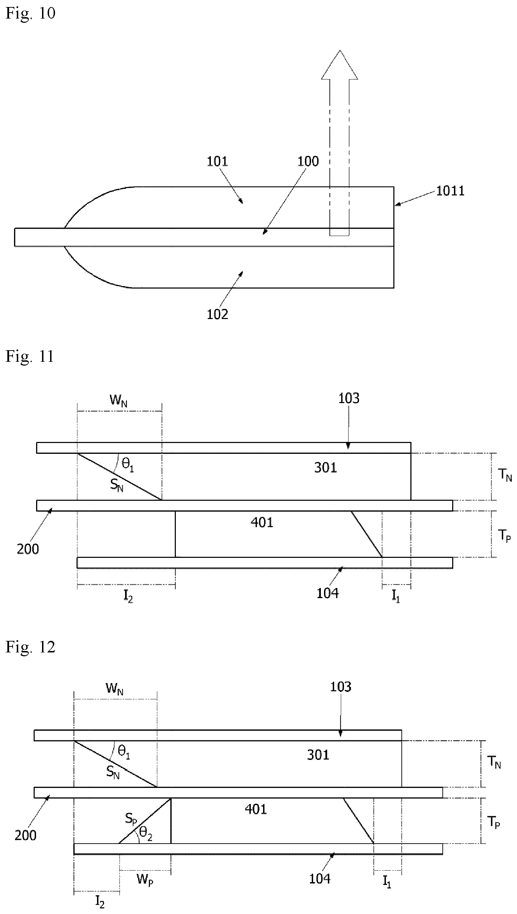

For example, when the cutting is performed in the dotted line direction along the mono-directional arrow direction in Figure 9, an electrode, in which one end portion is a sliding portion and the other end portion is a slitting portion, is formed, as shown in Figure 10.

In the electrode of Figure 10, the extension direction (1011) of the lateral side of the active material layer at the end portion, which is the slitting portion, is substantially parallel to the normal line (mono-directional arrow direction) of the surface of the current collector layer.

In the electrode assembly of the present application, the active material layer at both end portions of the positive electrode may be located more interiorly than the active material layer at both end portions of the negative electrode facing each other, respectively.

Here, the matter that the active material layer at both end portions of the positive electrode is located more interiorly than the active material layer at both end portions of the negative electrode facing each other, respectively, means a state that when the electrode assembly is observed in the normal line direction of the surface of the separator, the negative electrode active material layer is more extended and formed at both end portions compared to the positive electrode active material layer.

That is, as exemplarily shown in Figure 11 or Figure 12, when the electrode assembly is observed along the normal line direction of the surface of the separator (200), the negative electrode active material layer (301) is more extended and formed along the longitudinal direction of the current collector layer (103, 104) compared to the positive electrode active material layer (401). Therefore, in Figures 11 and 12, I₁ and I₂ each exceed 0. With this arrangement, it is possible to effectively prevent a phenomenon in which the N/P ratio becomes less than 1 (hereinafter, maybe referred to as the N/P inversion phenomenon).

In one example, the negative electrode active material layer (301) may be formed to have a larger area than the positive electrode active material layer (401).

In one example, the ratio I₂/I₁ of the interval (I₁ in Figures 11 and 12) between the positive electrode active material layer (401) and the negative electrode active material layer (301) at the negative electrode terminal where the slitting portion is formed in the cross section of the electrode and the interval (I₂ in Figures 11 and 12) between the positive electrode active material layer (401) and the negative electrode active material layer (301) at the negative electrode terminal where the sliding portion is formed may be in a range of 0.5 to 10.

In another example, the ratio I₂/I₁ may be 1 or more, 1.5 or more, 2 or more, 2.5 or more, 3 or more, 4 or more, 5 or more, 6 or more, or 7 or more, or may be 9 or less, 8 or less, 7 or less, 6 or less, It may be 5 or less, 4 or less, 3 or less, 2.5 or less, 2 or less, 1.5 or less, or 1 or less or so. Under such a ratio, it is possible to provide an electrode assembly securing a high energy density while effectively preventing the N/P inversion phenomenon.

In the electrode assembly, the negative electrode active material layer may also be formed to be thicker than the positive electrode active material layer, whereby it is possible to provide an electrode assembly securing a high energy density while effectively preventing the N/P inversion phenomenon. In the above, the thickness of each active material layer is the thickness in the normal thickness region. If the thickness of the normal thickness region is somewhat inconsistent, the relevant thickness means the average thickness of the normal thickness region. Although not particularly limited, the ratio (TN/TP) of the thickness (TN) of the negative electrode active material layer and the thickness (TP) of the positive electrode active material layer (TN/TP) may be more than 1 and 5 or less or so. In another example, the ratio (TN/TP) may also be 4.5 or less, 4 or less, 3.5 or less, 3 or less, 2.5 or less, 2 or less, or 1.5 or less or so.

In the electrode assembly, the sliding portion may be formed in the active material layer of the end portion, which faces the end portion where the slitting portion of the negative electrode is formed, of the positive electrode end portions. By taking this form, it is possible to provide an electrode assembly securing a high energy density while effectively preventing the N/P inversion phenomenon.

Figures 11 and 12 are diagrams exemplarily showing electrode assemblies with this shape. The diagrams show a case where the active material layers (301, 401) are formed only between the current collectors (103, 104) and the separator (200), but the active material layers (301, 401) may also be formed on the opposite lateral sides of the respective current collector layers (103, 104).

Also, in Figures 11 and 12, the inclined surface (e.g., S_{N}, S_{P}, etc.) of the sliding portion is marked in a linear shape, but this is indicated for the convenience of explanation of the electrode assembly of the present application, where the inclined surface may also have a curved shape (for example, a convex curve or concave curve shape, etc.), or other different shapes rather than the linear shape.

Referring to Figures 11 and 12, the slitting portion is formed at the right end portion of the negative electrode active material layer (301), and the sliding portion is formed at the left end portion, where the sliding portion is formed at the right terminal of the positive electrode active material layer (401) facing the terminal where the slitting portion is formed.

Figure 11 is one aspect of the electrode assembly of the present application, which is a case in which the slitting portion is formed in the positive electrode active material layer (401) at the terminal opposite to the terminal (right terminal in Figure 11) where the sliding portion of the positive electrode active material layer (401) is formed in the above state.

In this structure, the slitting portion of the positive electrode active material layer (401) may exist interiorly compared to the sliding portion of the negative electrode active material layer (301).

Referring to the structure of Figure 11, the matter that the slitting portion of the positive electrode active material layer (401) exists interiorly compared to the sliding portion of the negative electrode active material layer (301) means that Equation 1 below is satisfied. [Equation 1] ${T}_{N} / tan {θ}_{1} \leq {I}_{2}$

In Equation 1, T_{N} is the thickness of the negative electrode active material layer, which is the thickness of the normal thickness region of the negative electrode active material layer, θ₁ is the inclination angle of the sliding portion of the negative electrode active material layer, and I₂ is the interval between the negative electrode active material layer and the negative electrode active material layer at the negative electrode terminal where the sliding portion is formed.

The T_{N}, θ₁ and I₂ are indicated in Figure 11.

Here, the inclined surface (S_{N}) of the negative electrode active material layer (301 in Figure 11) for obtaining θ₁ has an angle formed by a straight line connecting the starting point of the sliding portion and the end point of the sliding portion, and the longitudinal direction of the current collector layer (103) as in the diagram. The actual inclined surface of the sliding portion may also be in the linear shape, as shown in Figure 11, and may also be in other shapes, where even if it is not in the linear shape, it is obtained based on the virtual straight line when obtaining the θ₁.

In Equation 1 above, T_{N}/tanθ₁ is the width of the sliding portion of the negative electrode active material layer (301) to be indicated by W_{N} in Figure 11.

By forming the active material layers (301, 401) so that Equation 1 is satisfied, the electrode assembly may be designed to exhibit a high energy density while stably preventing the N/P inversion phenomenon.

Here, tanθ₁ may have a value within a range of 0.001 to 10. In another example, tanθ₁ may be 0.002 or more, 0.004 or more, 0.006 or more, 0.008 or more, 0.01 or more, 0.02 or more, 0.04 or more, 0.06 or more, 0.08 or more, 0.1 or more, 0.12 or more, 0.14 or more, 0.16 or more, 0.18 or more, or 0.2 or more, or may also be 9 or less, 8 or less, 7 or less, 6 or less, 5 or less, 4 or less, 3 or less, 2 or less, 1 or less, 0.8 or less, 0.6 or less, 0.4 or less, 0.2 or less, 0.1 or less, 0.08 or less, 0.06 or less, 0.04 or less, 0.02 or less, 0.01 or less, 0.008 or less, 0.006 or less, 0.004 or less, or 0.002 or less or so.

The aspect of Figure 11 may also further satisfy Equation 2 below. [Equation 2] ${I}_{2} \leq {T}_{N} / sin {θ}_{1}$

In Equation 2, the meanings of T_{N}, θ₁, and I₂ are the same as in Equation 1.

The effect intended in the present application can be further improved by further satisfying Equation 2.

In another aspect of the present application, as shown in Figure 12, a second sliding portion may also be formed in the positive electrode active material layer (401) at the terminal (left terminal of Figure 12) opposite to the terminal (right terminal of Figure 12) where the sliding portion of the positive electrode active material layer (401) is formed.

In this case, the electrode assembly can be designed so that Equation 3 below is satisfied. [Equation 3] ${T}_{N} / tan {θ}_{1} \leq {I}_{2} + {T}_{P} / tan {θ}_{2}$

In Equation 3, T_{N}, θ₁ and I₂ are as defined in Equations 1 and 2, T_{P} is the thickness of the positive electrode active material layer, and θ₂ is the inclination angle of the second sliding portion of the positive electrode active material layer.

Here, the meaning of the thickness TP of the positive electrode active material layer is the thickness of the normal thickness region of the positive electrode active material layer, like the thickness TN of the negative electrode active material layer in Equations 1 and 2. In addition, the inclination angle θ₂ of the second sliding portion of the positive electrode active material layer may also be obtained according to the method of obtaining θ₁ in Equations 1 and 2.

The relationship of Equation 3 means that the sum of I₂ and W_{P} in Figure 12 is equal to or greater than W_{N}. Such a relationship is a necessary relationship in achieving the object of the present application.

The structure of Figure 12 can be designed to further satisfy Equation 4 below. [Equation 4] ${I}_{2} + {T}_{P} / tan {θ}_{2} \leq {T}_{N} / sin {θ}_{1}$

In Equation 4, T_{N}, θ₁, I₂, T_{P} and θ₂ have the same meanings as in Equation 3.

The structure of Figure 12 can also be designed so that Equation 5 below is further satisfied. [Equation 5] ${θ}_{2} / {θ}_{1} > 1$

In Equation 5, θ₁ and θ₂ have the same meanings as in Equations 3 and 4.

The upper limit of θ₂/θ₁ in Equation 5 may be formed in an appropriate ratio. For example, θ₂/θ₁ may be 5 or less, 4.5 or less, 4 or less, 3.5 or less, 3 or less, 2.5 or less, 2 or less, or 1.5 or less or so.

Through such a design, it is possible to maximize the capacity per unit area of the positive electrode while ensuring a capacity relationship between the negative electrode and positive electrode in which the N/P inversion does not occur.

As described above, in the structures of the electrode assemblies of Figures 11 and 12, the cases where the active material layers (301, 401) are formed only between the current collectors (103, 104) and the separator (200) are indicated, but the active material layers (301, 401) may also be formed on opposite sides of the respective current collector layers (103, 104).

For example, in the above structure, the negative electrode may further comprise an active material layer formed on the lateral side opposite to the side of the current collector layer (103 in Figures 11 and 12) facing the separator (200).

In this case, the active material layer which is further included may have a symmetrical structure with the active material layer (301 in Figures 11 and 12) existing between the current collector layer (103 in Figures 11 and 12) and the separator (200 in Figures 11 and 12).

That is, for example, as shown in Figure 10, when the active material layers (101, 102) are formed on both sides of the current collector layer (100), the active material layers (101, 102) may have a symmetrical structure. In this instance, the symmetrical structure means a substantially symmetrical structure.

Therefore, in the symmetrical structure, the inclination angle of the sliding portion (for example, θ₁ in Figures 11 and 12) or the thickness (T_{N} in Figures 11 and 12) of the active material layer do not have to have completely the same value. For example, when the absolute value of the error in the inclination angle or thickness is 10% or less, 9% or less, 8% or less, 7% or less, 6% or less, 5% or less, 4% or less, 3% or less, 2% or less, or 1% or less in both active material layers, it can be regarded that both active material layers have a symmetrical structure. Here, for example, in the case of thickness, when the thickness of one active material layer is designated as T_{N1} and the thickness of the other active material layer is designated as T_{N2}, the error is calculated as 100X(T_{N1} - T_{N2})/T_{N2}, which is the same even in the case of the inclination angle.

In the above structure, the positive electrode may also further comprise an active material layer formed on the lateral side opposite to the side of the current collector layer (104 in Figures 11 and 12) facing the separator (200).

In this case, the active material layer which is further included may have a symmetrical structure with the active material layer (401 in Figures 11 and 12) existing between the current collector layer (104 in Figures 11 and 12) and the separator (200 in Figures 11 and 12), like the case of the negative electrode, where the meaning of symmetrical structure is the same as the case of the negative electrode.

In the present application, the surface of the sliding portion (i.e., the surface of the inclined portion) in the active material layer of the negative electrode or the positive electrode may be a cut surface, that is, a cut surface. That is, the sliding portion may be a sliding portion that occurs naturally during the slurry coating process, or may be one artificially formed by cutting. When the inclination angle or width (W_{N}, W_{P}, θ₁, θ₂, etc. in Figures 11 and 12) of the naturally occurring sliding portion, or the interval (I₁ and I₂, etc. in Figures 11 and 12) between the negative electrode active material layer and the positive electrode active material layer does not satisfy Equations 1 to 5 above, the sliding portion can be artificially formed using a known cutting method.

The method of artificially forming such a sliding portion is not particularly limited, and a known etching, cutting, or non-contact cutting (for example, cutting using a laser) method may be applied.

Also, in the electrode assembly of the present application, the materials forming the current collector, active material layer, and the like are not particularly limited, and the structure can be formed using known materials.

In addition, the manufacturing method is not limited, and the electrode assembly can be constructed by manufacturing the electrode using a known manufacturing method, where the above-mentioned etching, cutting, or non-contact cutting process may also be performed on the electrode formed by a known manufacturing method, if necessary.

The present application also relates to a secondary battery or electrochemical element comprising the electrode assembly and the electrolyte.

If the electrode assembly of the present application is applied, the materials constituting the secondary battery or electrochemical element are not particularly limited, and known materials can be used.

## Claims

1. An electrode assembly, comprising:
a negative electrode (300);
a positive electrode (400) and
a separator (200),
wherein the negative electrode (300) and the positive electrode (400) are laminated with the separator (200) interposed therebetween,
wherein each of the negative electrode (300) and the positive electrode (400) includes a current collector layer (103, 104), and an active material layer (301, 401) at least between the current collector layer (103, 104) and the separator (200),
wherein each of the negative electrode (300) and the positive electrode (400) has a first end portion, in which a tab portion is formed, and a second end portion opposite the first end portion,
wherein the negative electrode (300) and the positive electrode (400) are laminated such that their first end portions face each other, or such that the first end portion of one of the negative electrode (300) and the positive electrode (400) faces the second end portion of the other of the negative electrode (300) and the positive electrode (400),
wherein a slitting portion is formed in the active material layer (301) in one of the first and second end portions of the negative electrode (300), and a sliding portion (S) is formed in the active material layer (301) of the other of the first and second end portions of the negative electrode (300),
**characterized in that** the active material layers (401) of both end portions of the positive electrode (400) are located more interiorly than the active material layers (301) of both end portions of the negative electrode (300) facing each other, respectively, and
wherein a ratio I₂/I₁ of an interval I₂ between the positive electrode active material layer (401) and the negative electrode active material layer (301) at the negative electrode end portion where the sliding portion (S) is formed relative to an interval I₁ between the positive electrode active material layer (401) and the negative electrode active material layer (301) at the negative electrode end portion where the slitting part is formed is in a range of 0.5 to 10,
wherein the slitting portion is a portion formed such that an extension direction of the lateral side of the end portion of the active material layer (301, 401) in the cross section of the electrode (300, 400) forms an angle within ±5 degrees with the normal to the surface of the current collector layer, and
wherein the sliding portion (S) is a portion where an absolute value of a slope is in a range of 0.001 to 10, the slope is a slope of a graph drawn by setting the portion (10) where the active material layer (301, 401) begins in a cross section of the electrode (300, 400) as the original point (10), taking the distance from the original point (10) to any point of the active material layer (301, 401) measured along the longitudinal direction of the current collector layer (103, 104) as the x-axis value, and taking the thickness of the active material layer (301, 401) at the point of the relevant distance as the y-axis value, the length of the x-axis and the thickness of the y-axis have the same unit and the slope is a differential value at the relevant point in a case where the graph is not a straight line.

2. The electrode assembly according to claim 1, wherein the negative electrode active material layer (301) is thicker than the positive electrode active material layer (401).

3. The electrode assembly according to claim ₁, wherein a sliding portion (S) is formed in the active material layer (401) on the end portion of the positive electrode (400), the end portion of the positive electrode (400) facing the end portion of the negative electrode (300) on which the slitting portion is formed, and wherein a surface of the sliding portion (S) of the positive electrode active material layer (401) is preferably a cut surface.

4. The electrode assembly according to claim 3, wherein a slitting portion is formed in the positive electrode active material layer (401) of the end portion opposite to the end portion on which the sliding portion (S) of the positive electrode active material layer (401) is formed.

5. The electrode assembly according to claim 4, wherein the slitting portion of the positive electrode active material layer (401) is present interiorly compared to the sliding portion (S) of the negative electrode active material layer (301).

6. The electrode assembly according to claim 4, satisfying Equation 1 below: [Equation 1] ${T}_{N} / tan {θ}_{1} \leq {I}_{2}$
wherein, the T_{N} is a thickness of the negative electrode active material layer (301), the θ₁ is an inclination angle of the sliding portion (S) of the negative electrode (300), and the I₂ is the interval between the positive electrode active material layer (401) and the negative electrode active material layer (301) at the negative electrode end portion where the sliding portion (S) is formed,
wherein the inclination angle is an angle formed by a straight line connecting the starting point of the sliding portion (S) and the end point of the sliding portion (S), and the longitudinal direction of the current collector layer (103).

7. The electrode assembly according to claim 6, wherein the tanθ₁ is in a range of 0.001 to 10.

8. The electrode assembly according to claim 6, further satisfying Equation 2 below: [Equation 2] ${I}_{2} \leq {T}_{N} / sin {θ}_{1}$
wherein, the T_{N} is the thickness of the negative electrode active material layer (301), the θ₁ is the inclination angle of the sliding portion (S) of the negative electrode (300), and the I₂ is the interval between the positive electrode active material layer (401) and the negative electrode active material layer (301) at the negative electrode end portion where the sliding portion (S) is formed,
wherein the inclination angle is an angle formed by a straight line connecting the starting point of the sliding portion (S) and the end point of the sliding portion (S), and the longitudinal direction of the current collector layer (103).

9. The electrode assembly according to claim 3, wherein a second sliding portion is formed in the positive electrode active material layer (401) of the end portion opposite to the end portion where the sliding portion (S) of the positive electrode active material layer (401) is formed and wherein a surface of the second sliding portion of the positive electrode active material layer (401) is preferably a cut surface.

10. The electrode assembly according to claim 9, satisfying Equation 3 below: [Equation 3] ${T}_{N} / tan {θ}_{1} \leq {I}_{2} + {T}_{P} / tan {θ}_{2}$
wherein, the T_{N} is the thickness of the negative electrode active material layer (301), the θ₁ is the inclination angle of the sliding portion (S) of the negative electrode (300), the I₂ is the interval between the positive electrode active material layer (401) and the negative electrode active material layer (301) at the negative electrode end portion where the sliding portion (S) is formed, the T_{P} is a thickness of the positive electrode active material layer (401), and the θ₂ is an inclination angle of the second sliding portion of the positive electrode (400),
wherein the inclination angle is an angle formed by a straight line connecting the starting point of the sliding portion (S) and the end point of the sliding portion (S), and the longitudinal direction of the current collector layer (103, 104).

11. The electrode assembly according to claim 10, further satisfying Equation 4 below: [Equation 4] ${I}_{2} + {T}_{P} / tan {θ}_{2} \leq {T}_{N} / sin {θ}_{1}$
wherein, the T_{N} is the thickness of the negative electrode active material layer (301), the θ₁ is the inclination angle of the sliding portion (S) of the negative electrode (300), the I₂ is the interval between the positive electrode active material layer (401) and the negative electrode active material layer (301) at the negative electrode terminal where the sliding portion (S) is formed, the T_{P} is the thickness of the positive electrode active material layer (401), and the θ₂ is the inclination angle of the second sliding portion of the positive electrode (400),
wherein the inclination angle is an angle formed by a straight line connecting the starting point of the sliding portion (S) and the end point of the sliding portion (S), and the longitudinal direction of the current collector layer (103, 104).

12. The electrode assembly according to claim 9, satisfying Equation 5 below: [Equation 5] ${θ}_{2} / {θ}_{1} > 1$
wherein, the θ₁ is the inclination angle of the sliding portion (S) of the negative electrode (300), and the θ₂ is the inclination angle of the second sliding portion of the positive electrode (400),
wherein the inclination angle is an angle formed by a straight line connecting the starting point of the sliding portion (S) and the end point of the sliding portion (S), and the longitudinal direction of the current collector layer (103, 104).

13. The electrode assembly according to claim 1, wherein the negative electrode (300) further comprises an active material layer (302) formed on a surface of the current collector layer (103) opposite to a surface of the current collector layer (103) facing the separator (200) and wherein the active material layer (302) formed on the surface of the current collector layer (103) opposite to the surface of the current collector layer (103) facing the separator (200) and the active material layer (301) between the current collector layer (103) and the separator (200) preferably have a symmetrical structure.

14. The electrode assembly according to claim 1, wherein the positive electrode (400) further comprises an active material layer (402) formed on a surface of the current collector layer (104) opposite to a surface of the current collector layer (104) facing the separator (200) and wherein the active material layer (402) formed on the surface of the current collector layer (104) opposite to the surface of the current collector layer (104) facing the separator (200) and the active material layer (401) between the current collector layer (104) and the separator (200) preferably have a symmetrical structure.

15. A secondary battery, comprising:
the electrode assembly of any one of claims 1 to 14, and
an electrolyte.

## Patentansprüche

1. Elektrodenanordnung aufweisend:
eine negative Elektrode (300);
eine positive Elektrode (400) und
einen Separator (200),
wobei die negative Elektrode (300) und die positive Elektrode (400) mit dem dazwischen angeordneten Separator (200) laminiert sind,
wobei die negative Elektrode (300) und die positive Elektrode (400) jeweils eine Stromkollektorschicht (103, 104) und eine Aktivmaterialschicht (301, 401) zumindest zwischen der Stromkollektorschicht (103, 104) und dem Separator (200) aufweisen,
wobei die negative Elektrode (300) und die positive Elektrode (400) jeweils einen ersten Endabschnitt, in dem ein Laschenabschnitt ausgebildet ist, und einen zweiten Endabschnitt gegenüber dem ersten Endabschnitt aufweisen,
wobei die negative Elektrode (300) und die positive Elektrode (400) so laminiert sind, dass ihre ersten Endabschnitte einander zugewandt sind, oder so, dass der erste Endabschnitt einer der negativen Elektrode (300) und der positiven Elektrode (400) dem zweiten Endabschnitt der anderen der negativen Elektrode (300) und der positiven Elektrode (400) zugewandt ist,
wobei ein Schlitzabschnitt in der Aktivmaterialschicht (301) in einem der ersten und zweiten Endabschnitte der negativen Elektrode (300) ausgebildet ist und ein Gleitabschnitt (S) in der Aktivmaterialschicht (301) des anderen der ersten und zweiten Endabschnitte der negativen Elektrode (300) ausgebildet ist,
**dadurch gekennzeichnet, dass** die Aktivmaterialschichten (401) beider Endabschnitte der positiven Elektrode (400) weiter innen angeordnet sind als die Aktivmaterialschichten (301) beider Endabschnitte der negativen Elektrode (300), die einander zugewandt sind, und
wobei ein Verhältnis I₂/I₁ eines Intervalls I₂ zwischen der Aktivmaterialschicht (401) der positiven Elektrode und der Aktivmaterialschicht (301) der negativen Elektrode an dem Endabschnitt der negativen Elektrode, an dem der Gleitabschnitt (S) ausgebildet ist, relativ zu einem Intervall I₁ zwischen der Aktivmaterialschicht (401) der positiven Elektrode und der Aktivmaterialschicht (301) der negativen Elektrode an dem Endabschnitt der negativen Elektrode, an dem der Schlitzabschnitt ausgebildet ist, in einem Bereich von 0,5 bis 10 liegt,
wobei der Schlitzabschnitt ein Abschnitt ist, der so ausgebildet ist, dass eine Erstreckungsrichtung der lateralen Seite des Endabschnitts der Aktivmaterialschicht (301, 401) im Querschnitt der Elektrode (300, 400) einen Winkel innerhalb von ±5 Grad mit der Normalen zur Oberfläche der Stromkollektorschicht bildet, und
wobei der Gleitabschnitt (S) ein Abschnitt ist, bei dem ein Absolutwert einer Steigung in einem Bereich von 0,001 bis 10 liegt, die Steigung eine Steigung eines Graphen ist, der gezeichnet wird, indem der Abschnitt (10), an dem die Aktivmaterialschicht (301, 401) in einem Querschnitt der Elektrode (300, 400) beginnt, als der ursprüngliche Punkt (10) festgelegt wird, der Abstand von dem ursprünglichen Punkt (10) zu einem beliebigen Punkt der Aktivmaterialschicht (301, 401), gemessen entlang der Längsrichtung der Stromkollektorschicht (103, 104), als der x-Achsenwert genommen wird und die Dicke der Aktivmaterialschicht (301, 401) an dem Punkt des relevanten Abstands als der y-Achsenwert genommen wird, die Länge der x-Achse und die Dicke der y-Achse die gleiche Einheit haben und die Steigung ein Differenzwert an dem relevanten Punkt ist, wenn der Graph keine gerade Linie ist.

2. Elektrodenanordnung nach Anspruch 1, wobei die Aktivmaterialschicht (301) der negativen Elektrode dicker ist als die Aktivmaterialschicht (401) der positiven Elektrode.

3. Elektrodenanordnung nach Anspruch 1, wobei ein Gleitabschnitt (S) in der Aktivmaterialschicht (401) auf dem Endabschnitt der positiven Elektrode (400) ausgebildet ist, wobei der Endabschnitt der positiven Elektrode (400) dem Endabschnitt der negativen Elektrode (300) zugewandt ist, auf dem der Schlitzabschnitt ausgebildet ist, und wobei eine Oberfläche des Gleitabschnitts (S) der Aktivmaterialschicht (401) der positiven Elektrode vorzugsweise eine Schnittfläche ist.

4. Elektrodenanordnung nach Anspruch 3, wobei ein Schlitzabschnitt in der Aktivmaterialschicht (401) der positiven Elektrode des Endabschnitts gegenüber dem Endabschnitt ausgebildet ist, auf dem der Gleitabschnitt (S) der Aktivmaterialschicht (401) der positiven Elektrode ausgebildet ist.

5. Elektrodenanordnung nach Anspruch 4, wobei der Schlitzabschnitt der Aktivmaterialschicht (401) der positiven Elektrode im Vergleich zum Gleitabschnitt (S) der Aktivmaterialschicht (301) der negativen Elektrode weiter innen vorhanden ist.

6. Elektrodenanordnung nach Anspruch 4, die die nachstehende Gleichung 1 erfüllt: [Gleichung 1] ${T}_{N} / tan {θ}_{1} \leq {I}_{2}$
wobei T_{N} eine Dicke der Aktivmaterialschicht (301) der negativen Elektrode ist, θ₁ ein Neigungswinkel des Gleitabschnitts (S) der negativen Elektrode (300) ist und I₂ das Intervall zwischen der Aktivmaterialschicht (401) der positiven Elektrode und der Aktivmaterialschicht (301) der negativen Elektrode an dem Endabschnitt der negativen Elektrode ist, an dem der Gleitabschnitt (S) ausgebildet ist,
wobei der Neigungswinkel ein Winkel ist, der durch eine gerade Linie, die den Startpunkt des Gleitabschnitts (S) und den Endpunkt des Gleitabschnitts (S) verbindet, und die Längsrichtung der Stromkollektorschicht (103) gebildet wird.

7. Elektrodenanordnung nach Anspruch 6, wobei tanθ₁ in einem Bereich von 0,001 bis 10 liegt.

8. Elektrodenanordnung nach Anspruch 6, die ferner die nachstehende Gleichung 2 erfüllt: [Gleichung 2] ${I}_{2} \leq {T}_{N} / sin {θ}_{1}$
wobei T_{N} die Dicke der Aktivmaterialschicht (301) der negativen Elektrode ist, θ₁ der Neigungswinkel des Gleitabschnitts (S) der negativen Elektrode (300) ist und I₂ das Intervall zwischen der Aktivmaterialschicht (401) der positiven Elektrode und der Aktivmaterialschicht (301) der negativen Elektrode an dem Endabschnitt der negativen Elektrode ist, an dem der Gleitabschnitt (S) ausgebildet ist,
wobei der Neigungswinkel ein Winkel ist, der durch eine gerade Linie, die den Startpunkt des Gleitabschnitts (S) und den Endpunkt des Gleitabschnitts (S) verbindet, und die Längsrichtung der Stromkollektorschicht (103) gebildet wird.

9. Elektrodenanordnung nach Anspruch 3, wobei ein zweiter Gleitabschnitt in der Aktivmaterialschicht (401) der positiven Elektrode des Endabschnitts gegenüber dem Endabschnitt ausgebildet ist, an dem der Gleitabschnitt (S) der Aktivmaterialschicht (401) der positiven Elektrode ausgebildet ist, und wobei eine Oberfläche des zweiten Gleitabschnitts der Aktivmaterialschicht (401) der positiven Elektrode vorzugsweise eine Schnittfläche ist.

10. Elektrodenanordnung nach Anspruch 9, die die nachstehende Gleichung 3 erfüllt: [Gleichung 3] ${T}_{N} / tan {θ}_{1} \leq {I}_{2} + {T}_{P} / tan {θ}_{2}$
wobei T_{N} die Dicke der Aktivmaterialschicht (301) der negativen Elektrode ist, θ₁ der Neigungswinkel des Gleitabschnitts (S) der negativen Elektrode (300) ist, I₂ das Intervall zwischen der Aktivmaterialschicht (401) der positiven Elektrode und der Aktivmaterialschicht (301) der negativen Elektrode an dem Endabschnitt der negativen Elektrode ist, an dem der Gleitabschnitt (S) ausgebildet ist, T_{P} eine Dicke der Aktivmaterialschicht (401) der positiven Elektrode ist und θ₂ ein Neigungswinkel des zweiten Gleitabschnitts der positiven Elektrode (400) ist,
wobei der Neigungswinkel ein Winkel ist, der durch eine gerade Linie, die den Startpunkt des Gleitabschnitts (S) und den Endpunkt des Gleitabschnitts (S) verbindet, und die Längsrichtung der Stromkollektorschicht (103, 104) gebildet wird.

11. Elektrodenanordnung nach Anspruch 10, die ferner die nachstehende Gleichung 4 erfüllt: [Gleichung 4] ${I}_{2} + {T}_{P} / tan {θ}_{2} \leq {T}_{N} / sin {θ}_{1}$
wobei T_{N} die Dicke der Aktivmaterialschicht (301) der negativen Elektrode ist, θ₁ der Neigungswinkel des Gleitabschnitts (S) der negativen Elektrode (300) ist, I₂ das Intervall zwischen der Aktivmaterialschicht (401) der positiven Elektrode und der Aktivmaterialschicht (301) der negativen Elektrode an dem Anschluss der negativen Elektrode ist, an dem der Gleitabschnitt (S) ausgebildet ist, T_{P} die Dicke der Aktivmaterialschicht (401) der positiven Elektrode ist und θ₂ der Neigungswinkel des zweiten Gleitabschnitts der positiven Elektrode (400) ist,
wobei der Neigungswinkel ein Winkel ist, der durch eine gerade Linie, die den Startpunkt des Gleitabschnitts (S) und den Endpunkt des Gleitabschnitts (S) verbindet, und die Längsrichtung der Stromkollektorschicht (103, 104) gebildet wird.

12. Elektrodenanordnung nach Anspruch 9, die die nachstehende Gleichung 5 erfüllt: [Gleichung 5] ${θ}_{2} / {θ}_{1} > 1$
wobei θ₁ der Neigungswinkel des Gleitabschnitts (S) der negativen Elektrode (300) ist und θ₂ der Neigungswinkel des zweiten Gleitabschnitts der positiven Elektrode (400) ist,
wobei der Neigungswinkel ein Winkel ist, der durch eine gerade Linie, die den Startpunkt des Gleitabschnitts (S) und den Endpunkt des Gleitabschnitts (S) verbindet, und die Längsrichtung der Stromkollektorschicht (103, 104) gebildet wird.

13. Elektrodenanordnung nach Anspruch 1, wobei die negative Elektrode (300) ferner eine Aktivmaterialschicht (302) aufweist, die auf einer Oberfläche der Stromkollektorschicht (103) gegenüber einer dem Separator (200) zugewandten Oberfläche der Stromkollektorschicht (103) ausgebildet ist, und wobei die Aktivmaterialschicht (302), die auf der Oberfläche der Stromkollektorschicht (103) gegenüber der dem Separator (200) zugewandten Oberfläche der Stromkollektorschicht (103) ausgebildet ist, und die Aktivmaterialschicht (301) zwischen der Stromkollektorschicht (103) und dem Separator (200) vorzugsweise eine symmetrische Struktur aufweisen.

14. Elektrodenanordnung nach Anspruch 1, wobei die positive Elektrode (400) ferner eine Aktivmaterialschicht (402) aufweist, die auf einer Oberfläche der Stromkollektorschicht (104) gegenüber einer dem Separator (200) zugewandten Oberfläche der Stromkollektorschicht (104) ausgebildet ist, und wobei die Aktivmaterialschicht (402), die auf der Oberfläche der Stromkollektorschicht (104) gegenüber der dem Separator (200) zugewandten Oberfläche der Stromkollektorschicht (104) ausgebildet ist, und die Aktivmaterialschicht (401) zwischen der Stromkollektorschicht (104) und dem Separator (200) vorzugsweise eine symmetrische Struktur aufweisen.

15. Sekundärbatterie aufweisend:
die Elektrodenanordnung nach einem der Ansprüche 1 bis 14, und
einen Elektrolyten.

## Revendications

1. Ensemble d'électrodes, comprenant :
une électrode négative (300) ;
une électrode positive (400) et
un séparateur (200),
l'électrode négative (300) et l'électrode positive (400) étant stratifiées avec le séparateur (200) intercalé entre elles,
chacune de l'électrode négative (300) et de l'électrode positive (400) comprenant une couche collectrice de courant (103, 104) et une couche de matière active (301, 401) au moins entre la couche collectrice de courant (103, 104) et le séparateur (200),
chacune de l'électrode négative (300) et de l'électrode positive (400) possédant une première partie terminale, dans laquelle une partie à languette est formée, et une deuxième partie terminale située face à la première partie terminale,
l'électrode négative (300) et l'électrode positive (400) étant stratifiées de sorte que leurs premières parties terminales se fassent face, ou de sorte que la première partie terminale de l'une de l'électrode négative (300) et de l'électrode positive (400) soit située face à la deuxième partie terminale de l'autre de l'électrode négative (300) et de l'électrode positive (400),
une partie de découpe étant formée dans la couche de matière active (301) dans l'une des première et deuxième parties terminales de l'électrode négative (300), et une partie coulissante (S) étant formée dans la couche de matière active (301) de l'autre des première et deuxième parties terminales de l'électrode négative (300),
**caractérisée en ce que** les couches de matière active (401) des deux parties terminales de l'électrode positive (400) sont situées plus à l'intérieur que les couches de matière active (301) des deux parties terminales de l'électrode négative (300) se faisant face respectivement, et
un rapport I₂/I₁ d'un intervalle I₂ entre la couche de matière active de électrode positive (401) et la couche de matière active de l'électrode négative (301) à la partie terminale de l'électrode négative où la partie coulissante (S) est formée relativement à un intervalle I₁ entre la couche de matière active de l'électrode positive (401) et la couche de matière active de l'électrode négative (301) à la partie terminale de l'électrode négative où la partie de découpe est formée dans la plage allant de 0,5 à 10,
la partie de découpe étant une partie formée de sorte qu'une direction d'extension du côté latéral de la partie terminale de la couche de matière active (301, 401) dans la section transversale de l'électrode (300, 400) forme un angle de ±5 degrés relativement à la normale à la surface de la couche collectrice de courant, et
la partie coulissante (S) étant une partie où une valeur absolue d'une pente se trouve dans une plage comprise entre 0,001 et 10, la pente étant une pente d'un graphe tracé en fixant la partie (10) d'où part la couche de matière active (301, 401) dans une coupe transversale de l'électrode (300, 400) en tant que point d'origine (10), en prenant la distance du point d'origine (10) à un point quelconque de la couche de matière active (301, 401) mesurée dans le sens longitudinal de la couche collectrice de courant (103, 104) en tant que valeur de l'axe X, et en prenant l'épaisseur de la couche de matière active (301, 401) au point de la distance pertinente en tant que valeur de l'axe Y, la longueur de l'axe X et l'épaisseur de l'axe Y ayant la même unité, et la pente étant une valeur différentielle au point pertinent d'un cas où le graphe n'est pas une ligne droite.

2. Ensemble d'électrodes selon la revendication 1, la couche de matière active de l'électrode négative (301) étant plus épaisse que la couche de matière active de l'électrode positive (401).

3. Ensemble d'électrodes selon la revendication 1, une partie coulissante (S) étant formée dans la couche de matière active (401) sur la partie terminale de l'électrode positive (400), la partie terminale de l'électrode positive (400) faisant face à la partie terminale de l'électrode négative (300) sur laquelle la partie de découpe est formée, et une surface de la partie coulissante (S) de la couche de matière active de l'électrode positive (401) étant de préférence une surface coupée.

4. Ensemble d'électrodes selon la revendication 3, une partie de découpe étant formée dans la couche de matière active de l'électrode positive (401) de la partie terminale située face à la partie terminale sur laquelle la partie coulissante (S) de la couche de matière active de l'électrode positive (401) est formée.

5. Ensemble d'électrodes selon la revendication 4, la partie de découpe de la couche de matière active de l'électrode positive (401) étant présente intérieurement par rapport à la partie coulissante (S) de la couche de matière active de l'électrode négative (301).

6. Ensemble d'électrodes selon la revendication 4, répondant à l'équation 1 ci-dessous : [Equation 1] ${T}_{N} / tan {θ}_{1} \leq {I}_{2}$
T_{N} étant une épaisseur de la couche de matière active de l'électrode négative (301), θ₁ étant un angle d'inclinaison de la partie coulissante (S) de l'électrode négative (300), et I₂ désignant l'intervalle entre la couche de matière active de l'électrode positive (401) et la couche de matière active de l'électrode négative (301) à la partie terminale de l'électrode négative où est formée la partie coulissante (S),
l'angle d'inclinaison étant un angle formé par une ligne droite reliant le point de départ de la partie coulissante (S) et le point d'arrivée de la partie coulissante (S), et la direction longitudinale de la couche collectrice de courant (103).

7. Ensemble d'électrodes selon la revendication 6, tanθ₁ étant comprise dans une plage allant de 0,001 à 10.

8. Ensemble d'électrodes selon la revendication 6, répondant en outre à l'équation 2 ci-dessous : [Equation 2] ${I}_{2} \leq {T}_{N} / sin {θ}_{1}$
T_{N} étant l'épaisseur de la couche de matière active de l'électrode négative (301), θ₁ étant l'angle d'inclinaison de la partie coulissante (S) de l'électrode négative (300), et I₂ désignant l'intervalle entre la couche de matière active de l'électrode positive (401) et la couche de matière active de l'électrode négative (301) à la partie terminale de l'électrode négative où est formée la partie coulissante (S),
l'angle d'inclinaison étant un angle formé par une ligne droite reliant le point de départ de la partie coulissante (S) et le point d'arrivée de la partie coulissante (S), et la direction longitudinale de la couche collectrice de courant (103).

9. Ensemble d'électrodes selon la revendication 3, une deuxième partie coulissante étant formée dans la couche de matière active de l'électrode positive (401) de la partie terminale face à la partie terminale où est formée la partie coulissante (S) de la couche de matière active de l'électrode positive (401), et une surface de la deuxième partie coulissante de la couche de matière active de l'électrode positive (401) étant de préférence une surface coupée.

10. Ensemble d'électrodes selon la revendication 9, répondant à l'équation 3 ci-dessous : [Equation 3] ${T}_{N} / tan {θ}_{1} \leq {I}_{2} + {T}_{P} / tan {θ}_{2}$
T_{N} étant l'épaisseur de la couche de matière active de l'électrode négative (301), θ₁ étant l'angle d'inclinaison de la partie coulissante (S) de l'électrode négative (300), et I₂ désignant l'intervalle entre la couche de matière active de l'électrode positive (401) et la couche de matière active de l'électrode négative (301) à la partie terminale de l'électrode négative où est formée la partie coulissante (S), T_{P} étant une épaisseur de la couche de matière active de l'électrode positive (401), et θ2 étant un angle d'inclinaison de la deuxième partie coulissante de l'électrode positive (400),
l'angle d'inclinaison étant un angle formé par une ligne droite reliant le point de départ de la partie coulissante (S) et le point d'arrivée de la partie coulissante (S), et la direction longitudinale de la couche collectrice de courant (103, 104).

11. Ensemble d'électrodes selon la revendication 10, répondant en outre à l'équation 4 ci-dessous : [Equation 4] ${I}_{2} + {T}_{P} / tan {θ}_{2} \leq {T}_{N} / sin {θ}_{1}$
T_{N} étant l'épaisseur de la couche de matière active de l'électrode négative (301), θ₁ étant l'angle d'inclinaison de la partie coulissante (S) de l'électrode négative (300), I₂ désignant l'intervalle entre la couche de matière active de l'électrode positive (401) et la couche de matière active de l'électrode négative (301) à la borne de l'électrode négative où est formée la partie coulissante (S), T_{P} étant l'épaisseur de la couche de matière active de l'électrode positive (401), et θ₂ étant l'angle d'inclinaison de la deuxième partie coulissante de l'électrode positive (400),
l'angle d'inclinaison étant un angle formé par une ligne droite reliant le point de départ de la partie coulissante (S) et le point d'arrivée de la partie coulissante (S), et la direction longitudinale de la couche collectrice de courant (103, 104).

12. Ensemble d'électrodes selon la revendication 9, répondant à l'équation 5 ci-dessous : [Equation 5] ${θ}_{2} / {θ}_{1} > 1$
θ₁ étant l'angle d'inclinaison de la partie coulissante (S) de l'électrode négative (300), et θ₂ étant l'angle d'inclinaison de la deuxième partie coulissante de l'électrode positive (400),
l'angle d'inclinaison étant un angle formé par une ligne droite reliant le point de départ de la partie coulissante (S) et le point d'arrivée de la partie coulissante (S), et la direction longitudinale de la couche collectrice de courant (103, 104).

13. Ensemble d'électrodes selon la revendication 1, l'électrode négative (300) comprenant en outre une couche de matière active (302) formée sur une surface de la couche collectrice de courant (103) située face à une surface de la couche collectrice de courant (103) faisant face au séparateur (200), et la couche de matière active (302) formée sur la surface de la couche collectrice de courant (103) face à la surface de la couche collectrice de courant (103) faisant face au séparateur (200) et la couche de matière active (301) entre la couche collectrice de courant (103) et le séparateur (200) possédant de préférence une structure symétrique.

14. Ensemble d'électrodes selon la revendication 1, l'électrode positive (400) comprenant en outre une couche de matière active (402) formée sur une surface de la couche collectrice de courant (104) située face à une surface de la couche collectrice de courant (104) faisant face au séparateur (200), et la couche de matière active (402) formée sur la surface de la couche collectrice de courant (104) faisant face à la surface de la couche collectrice de courant (104) située face au séparateur (200) et à la couche de matière active (401) entre la couche collectrice de courant (104) et le séparateur (200) possédant de préférence une structure symétrique.

15. Batterie secondaire, comprenant :
l'ensemble d'électrodes selon une quelconque des revendications 1 à 14, et
un électrolyte.
